# EUROPEAN PATENT APPLICATION

(11) **EP 3 889 513 A1**
(43) Date of publication of application: **06.10.2021**
(21) Application number: 18941178.8
(22) Date of filing: 27.11.2018
(51) Int. Cl.: F24F 7/007, F24F 11/46, F24F 11/77, F24F 110/10, F24F 110/12, F24F 110/70, F24F 120/12

(54) **VENTILATION REGULATION DEVICE AND VENTILATION REGULATION METHOD**

(71) Applicant: Mitsubishi Electric Corporation, Tokyo 100-8310 (JP)
(72) Inventor: TAMAKI, Shogo, Tokyo 100-8310 (JP); HAMADA, Mamoru, Tokyo 100-8310 (JP)
(74) Representative: Studio Torta S.p.A.
(86) International application number: PCT/JP2018/043470
(87) International publication number: WO 2020/110185

(57) **Abstract**

A system calculation unit (102) computes a required ventilation volume which is a ventilation volume required for an interior space where a plurality of ventilation devices are placed and ventilation is necessary. Further, the system calculation unit (102) decides, for each ventilation device of the plurality of ventilation devices, an individual ventilation volume which is a ventilation volume to be generated in each ventilation device, based on the required ventilation volume.

## Description

### Technical Field

The present invention relates to control of a ventilation volume.

### Background Art

In an air conditioning system that performs ventilation and a temperature adjustment in an interior space (hereinafter, also referred to as indoor(s)) such as an office, a plurality of air conditioners and ventilation devices may be arranged in the interior space. In such an air conditioning system, a motion sensor that detects the number of people present indoors may be placed. Then, there is a technique for adjusting an indoor environment according to whether or not a person is present indoors, based on a detection result of the motion sensor (for example, Patent Literature 1).

### Citation List

### Patent Literature

Patent Literature 1: JP2012-26697A

### Summary of Invention

### Technical Problem

An equipment control system of Patent Literature 1 controls lighting equipment and air conditioning equipment based on a sensory signal of the motion sensor. That is, the equipment control system of Patent Literature 1 turns off the lighting equipment in an area in which a person is absent. Further, the equipment control system of Patent Literature 1 stops the air conditioning equipment in the area in which a person is absent. Therefore, according to a technique of Patent Literature 1, it is possible to obtain an energy saving effect.

In order to increase the energy saving effect in air conditioning, it is important to adjust a ventilation volume efficiently. However, in the technique of Patent Literature 1, control of the ventilation device is not performed.

Therefore, in the technique of Patent Literature 1, there is a problem that an effect of reducing an air conditioning load by an adjustment of the ventilation volume is not obtained and the energy saving effect in the air conditioning is not sufficiently obtained.

The present invention mainly aims to solve such a problem. That is, the present invention mainly aims to efficiently adjust a ventilation volume and obtain an energy saving effect in air conditioning.

### Solution to Problem

A ventilation adjustment device according to the present invention includes:
a required ventilation volume computing unit to compute a required ventilation volume which is a ventilation volume required for an interior space where a plurality of ventilation devices are placed and ventilation is necessary; and
an individual ventilation volume deciding unit to decide, for each ventilation device of the plurality of ventilation devices, an individual ventilation volume which is a ventilation volume to be generated in each ventilation device, based on the required ventilation volume.

### Advantageous Effects of Invention

According to the present invention, since a ventilation volume can be efficiently adjusted, it is possible to obtain an energy saving effect in air conditioning.

### Brief Description of Drawings

Fig. 1 is a diagram illustrating a layout example of an office according to a first embodiment;
Fig. 2 is a diagram illustrating an example of an air conditioning area according to the first embodiment;
Fig. 3 is a diagram illustrating an example of an air conditioning system according to the first embodiment;
Fig. 4 is a diagram illustrating a functional configuration example of a system control device according to the first embodiment;
Fig. 5 is a diagram illustrating a ventilation method of a conventional technique;
Fig. 6 is a diagram illustrating a ventilation method according to the first embodiment;
Fig. 7 is a flowchart illustrating an operation example of the system control device according to the first embodiment;
Fig. 8 is a flowchart illustrating an operation example of the system control device according to the first embodiment; and
Fig. 9 is a diagram illustrating a hardware configuration example of the system control device according to the first embodiment.

### Description of Embodiments

Hereinafter, embodiments of the present invention will be described with reference to the drawings. In the following description of the embodiments and the drawings, the same reference numerals indicate the same or corresponding parts.

### First Embodiment.

### ^{∗∗∗} Description of Configuration ^{∗∗∗}

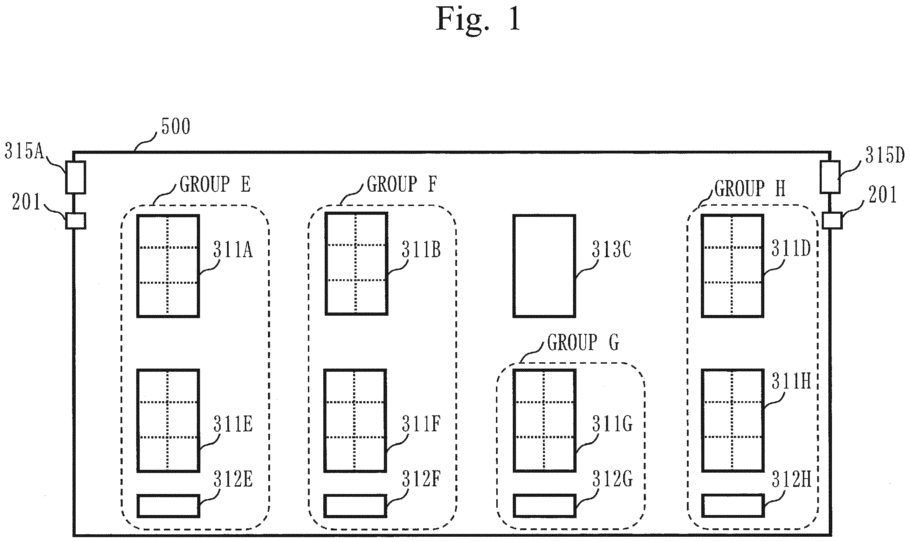

Fig. 1 illustrates a layout example of an office 500 according to the present embodiment. The office 500 illustrated in Fig. 1 is an example of an interior space.

In the office 500 illustrated in Fig. 1, a group is formed for each task content. In Fig. 1, there are four groups which are a group E, a group F, a group G, and a group H.

In the group E, there is a group leader seat 312E. In the group F, there is a group leader seat 312F. In the group G, there is a group leader seat 312G. In the group H, there is a group leader seat 312H.

Further, in the group E, there are staff seats 311A and 311E. In the group F, there are staff seats 311B and 311F. In the group G, there is a staff seat 311G. In the group H, there are staff seats 311D and 311H. Besides, each of the staff seats 311A to H is configured by six seats. Further, a meeting space 313C is a space provided for a meeting. In the meeting space 313C, people who hold a meeting are seated as necessary.

In addition, an entry into and an exit from the office 500 are performed through a door 315A and a door 315D. A straight part from the door 315A to the door 315D is used as a passage. An entry/exit management device 201 is placed next to each of the door 315A and the door 315D. The entry/exit management device 201 keeps track of the number of people present in the office 500 by managing (counting) the number of people who have passed through the doors 315A and 315D.

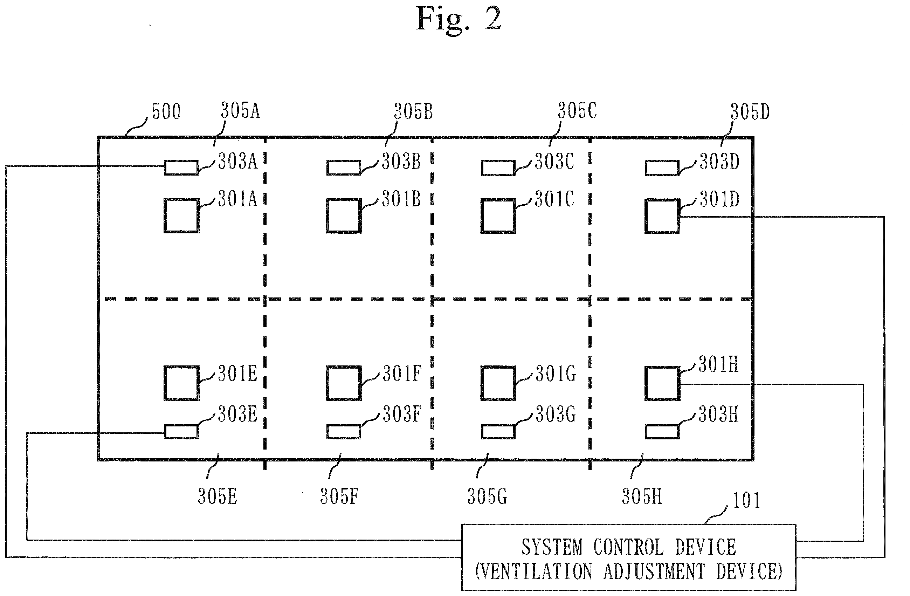

Next, a layout of air conditioners 301A to 301H and air supply ports 303A to 303H in the office 500 will be described with reference to Fig. 2.

Besides, in the following, when the air conditioners 301A to 301H do not need to be distinguished, the air conditioners 301A to 301H are collectively referred to as an air conditioner 301. When the air supply ports 303A to 303H do not need to be distinguished, the air supply ports 303A to 303H are collectively referred to as an air supply port 303.

The office 500 needs ventilation, and the ventilation is performed by the air conditioner 301 and the air supply port 303.

The office 500 is separated into air conditioning areas 305A to 305H. That is, objects of air conditioning are eight areas which are the air conditioning areas 305A to 305H. Besides, in Fig. 2, a boundary for each area is indicated by broken lines for an explanatory reason. However, it does not mean that walls are provided in the office 500. In the following, when the air conditioning areas 305A to 305H do not need to be distinguished, the air conditioning areas 305A to 305H are collectively referred to as an air conditioning area 305.

In an example of Fig. 2, in each of the air conditioning areas 305, the air conditioner 301 and the air supply port 303 are provided. However, a position of the air supply port 303 is not limited to the example of Fig. 2. For example, it is acceptable to remove the air supply port 303D and place the air supply port 303C between the air conditioning area 305C and the air conditioning area 305D so that the air supply port 303C ventilates two zones. Further, in the office 500, it is not necessarily required to equalize the installation number of air conditioners 301 with the installation number of air supply ports 303.

Further, each of the air conditioners 301 is connected to a system control device 101. In Fig. 2, for a drawing reason, only the air conditioner 301D and the air conditioner 301H are connected to the system control device 101. However, it is assumed that all the air conditioners 301 are connected to the system control device 101. The system control device 101 controls each of the air conditioners 301 via an air conditioner control device 121, which is described later, mounted on each of the air conditioners 301.

Further, each of the air supply ports 303 is also connected to the system control device 101. In Fig. 2, for a drawing reason, only the air supply port 303A and the air supply port 303E are connected to the system control device 101. However, it is assumed that all the air supply ports 303 are connected to the system control device 101. The system control device 101 controls each of the air supply ports 303 via a ventilation control device 141, which is described later, mounted on each of the air supply ports 303.

The system control device 101 corresponds to a ventilation adjustment device. Further, an operation performed by the system control device 101 corresponds to a ventilation adjustment method. Details of the system control device 101 will be described later.

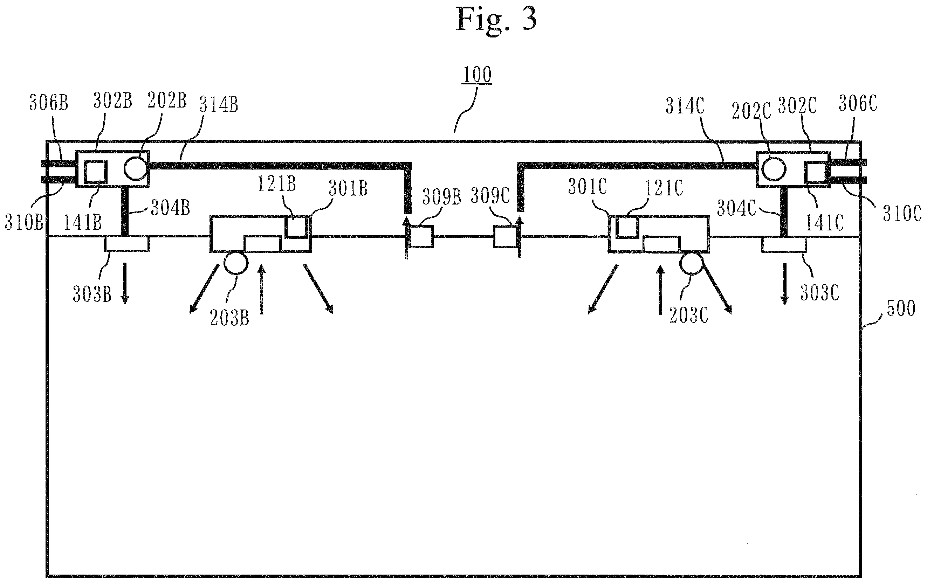

Fig. 3 illustrates a connection relationship of an air conditioning system 100 according to the first embodiment.

Fig. 3 illustrates only the air conditioning system 100 in the air conditioning areas 305B and 305C. However, the other air conditioning areas 305 have a same configuration.

Hereinafter, the air conditioning area 305B will be described. The same applies to the air conditioning area 305C and the other air conditioning areas 305.

The air conditioner 301B sucks in indoor air from the center. Further, sucked indoor air is chilled (in a case of cooling) by refrigerant (not illustrated) flowing in the air conditioner 301B and is blown out indoors to perform a temperature adjustment (chilling) of the air conditioning area 305B.

Further, outside air sucked in from a duct 306B is introduced indoors from the air supply port 303B via a ventilation device 302B and a duct 304B. Besides, the ventilation device 302 is connected to a ceiling wall with an upper plate by metal fittings and is hung therefrom. Further, a discharging port for discharging the indoor air to the outside is usually incorporated in components of pieces of lighting equipment 309B which are evenly placed on an entire ceiling. The indoor air sucked in from the lighting equipment 309B passes through the ventilation device 302B via a duct 314B, and then is exhausted from a duct 310B to the outside.

Further, a motion sensor 203B is placed in the air conditioner 301B. The motion sensor 203B detects presence or absence of a person in the air conditioning area 305B in which the air conditioner 301B is placed. Hereinafter, one or more areas in which a person is present are referred to as a manned zone. On the other hand, one or more areas in which no person is present are referred to as an unmanned zone.

For example, a case is considered in which each of a motion sensor 203A placed in the air conditioning area 305A, the motion sensor 203B placed in the air conditioning area 305B, and a motion sensor 203G placed in the air conditioning area 305A has detected a person. In this case, the air conditioning areas 305A, 305B, and 305G are treated as manned zones. On the other hand, the air conditioning areas 305C, 305D, 305E, 305F, and 305H are treated as unmanned zones.

The motion sensor 203 is, for example, an infrared sensor.

In the present embodiment, a ventilation fan of the ventilation device 302 operates by using a DC motor. In the ventilation fan of the ventilation device 302, it is possible to continuously select a fan rotation speed and change the fan rotation speed. In the ventilation device 302, a temperature sensor 202B is provided. The temperature sensor 202B functions as an outside air temperature sensor that detects a temperature of the outside air coming in through a duct 306 and an indoor temperature sensor that detects a temperature of the indoor air coming in through a duct 314.

The air conditioner 301B is provided with an air conditioner control device 121B. The air conditioner control device 121B is configured by, for example, a microcomputer.

The air conditioner control device 121B calculates various types of control parameters. Further, the air conditioner control device 121B controls operation modes (cooling operation, blower operation, and stop) of the air conditioner 301B. Further, the air conditioner control device 121B notifies the system control device 101 of a current operation mode of the air conditioner 301B. Further, the air conditioner control device 121B receives a control value which is from the system control device 101.

When the air conditioner control devices 121A to H do not need to be distinguished, the air conditioner control devices 121A to H are collectively referred to as the air conditioner control device 121.

In the ventilation device 302B, a ventilation control device 141B is provided. The ventilation control device 141B is configured by, for example, a microcomputer.

The ventilation control device 141B calculates various types of control parameters. Further, the ventilation control device 141B controls the rotation speed of the ventilation fan of the ventilation device 302B. Further, the ventilation control device 141B transmits to the system control device 101, an operation value such as the rotation speed of the ventilation fan. Further, the ventilation control device 141B receives the control value which is from the system control device 101. Further, in the ventilation control device 141B, a ventilation air volume value "m3/h" with respect to the rotation speed, "rpm", of the rotation fan is stored.

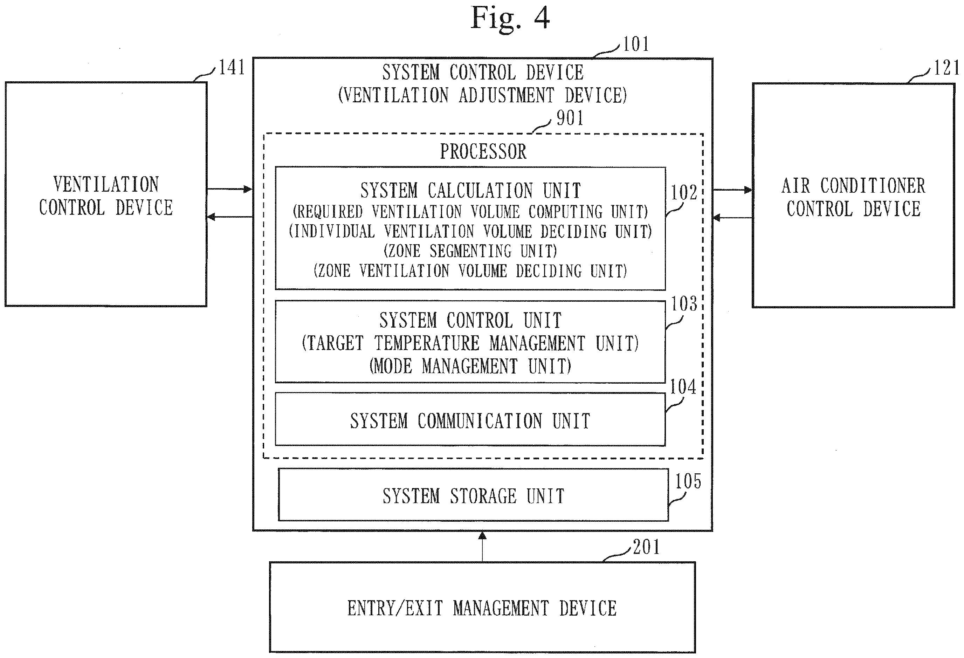

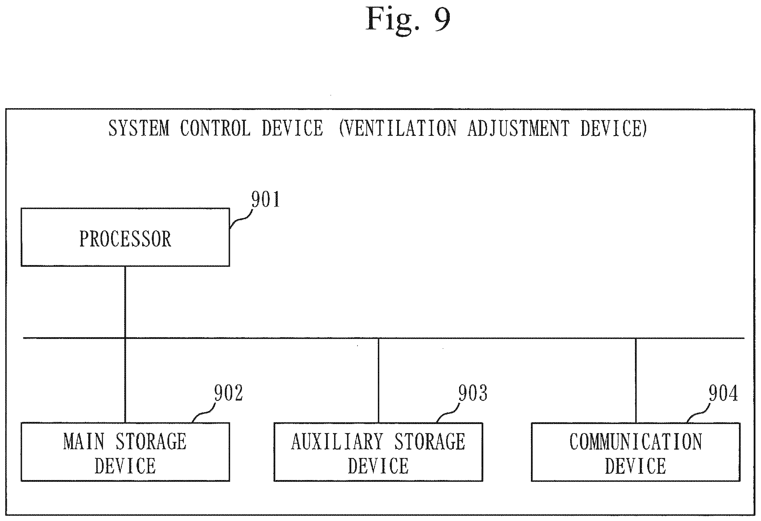

Fig. 4 illustrates a functional configuration example of the system control device 101 according to the present embodiment. Further, Fig. 9 illustrates a hardware configuration example of the system control device 101 according to the present embodiment.

The system control device 101 according to the present embodiment is a computer.

As illustrated in Fig. 9, the system control device 101 includes a processor 901, a main storage device 902, an auxiliary storage device 903, and a communication device 904 as hardware.

Further, as illustrated in Fig. 4 as a functional configuration, the system control device 101 includes a system calculation unit 102, a system control unit 103, a system communication unit 104, and a system storage unit 105.

In the auxiliary storage device 903, programs that realize the functions of the system calculation unit 102, the system control unit 103, and the system communication unit 104 are stored.

These programs are loaded from the auxiliary storage device 903 into the main storage device 902. Then, the processor 901 executes these programs to perform operations of the system calculation unit 102, the system control unit 103, and the system communication unit 104 which are described later.

Fig. 4 schematically indicates a state in which the processor 901 executes the programs that realize the functions of the system calculation unit 102, the system control unit 103, and the system communication unit 104.

The system storage unit 105 is realized by, for example, the main storage device 902 or the auxiliary storage device 903.

The system calculation unit 102 performs various types of calculations.

More specifically, the system calculation unit 102 segments the office 500 into the manned zone in which a person is present and the unmanned zone in which no person is present.

Further, the system calculation unit 102 decides a ventilation volume to be generated in the manned zone and the ventilation volume to be generated in the unmanned zone within a required ventilation volume required for the office 500. Further, the system calculation unit 102 changes the ventilation volume to be generated in the manned zone and the ventilation volume to be generated in the unmanned zone according to a relationship between an outside air temperature and an indoor temperature (interior temperature) of the office 500. More specifically, when the outside air temperature exceeds the indoor temperature in the office 500, the system calculation unit 102 decides the ventilation volume to be generated in the manned zone and the ventilation volume to be generated in the unmanned zone so that the ventilation volume to be generated in the unmanned zone is more than the ventilation volume to be generated in the manned zone. On the other hand, when the outside air temperature is equal to or lower than the indoor temperature in the office 500, the system calculation unit 102 decides the ventilation volume to be generated in the manned zone and the ventilation volume to be generated in the unmanned zone so that the ventilation volume to be generated in the manned zone is more than the ventilation volume to be generated in the unmanned zone. Further, when the outside air temperature is lower than the indoor temperature in the office 500 and is equal to or lower than a predetermined room temperature control change temperature (threshold), the system calculation unit 102 decides the ventilation volume to be generated in the manned zone and the ventilation volume to be generated in the unmanned zone so that the ventilation volume of the manned zone decreases and the ventilation volume of the unmanned zone increases as the outside air temperature lowers.

The system calculation unit 102 corresponds to a required ventilation volume computing unit, an individual ventilation volume deciding unit, a zone segmenting unit, and a zone ventilation volume deciding unit.

Besides, the outside air temperature and the indoor temperature are obtained using the temperature sensor 202.

The system control unit 103 controls the air conditioner control device 121 and the ventilation control device 141.

Specifically, when the system control unit 103 controls the ventilation device 302 placed in the manned zone by a room temperature control scheme which is described later, the system control unit 103 sets a target indoor temperature in the room temperature control scheme to a temperature higher than a current set temperature of the air conditioner 301.

Further, when the system control unit 103 sets the target indoor temperature in the room temperature control scheme to the temperature higher than the current set temperature of the air conditioner 301, the system control unit 103 changes the operation mode of the air conditioner 301 to one of a thermo-off mode and a blower mode

The system control unit 103 corresponds to a target temperature management unit and a mode management unit.

The system communication unit 104 communicates with the air conditioner control device 121, the ventilation control device 141, and the entry/exit management device 201.

The system communication unit 104 transmits, for example, to the air conditioner control device 121, a control value instructing a change of the operation mode of the air conditioner 301.

Further, the system communication unit 104 transmits to the ventilation control device 141, a control value instructing the rotation speed of the ventilation fan of the ventilation device 302.

Also, when the entry/exit management device 201 detects an entry/exit, the system communication unit 104 receives a detection result from the entry/exit management device 201.

The system storage unit 105 stores a set value, a control value, a floor square measure of the office 500, the number of people present in the office 500, and the like.

Besides, the ventilation control device 141 of each of the ventilation devices 302 holds information indicating the rotation speed of the ventilation fan and the ventilation volume blown out from the ventilation device 302.

Further, the target indoor temperature in the manned zone is notified to the ventilation control device 141 by the system communication unit 104 of the system control device 101, and is stored in the ventilation control device 141.

### ^{∗∗∗} Description of Operation ^{∗∗∗}

Next, an operation example of the system control device 101 according to the present embodiment will be described.

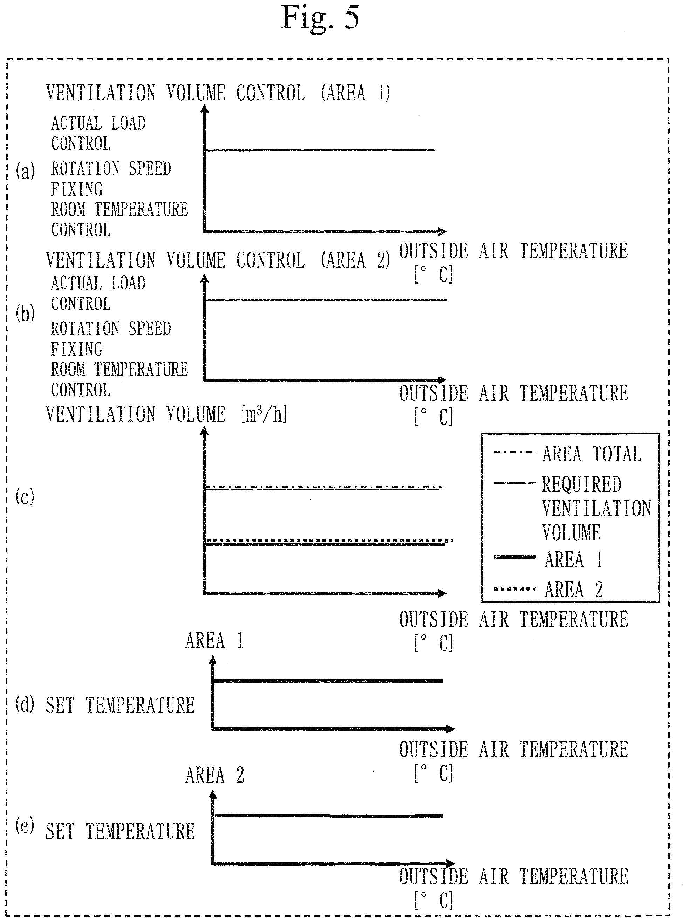

First, a conventional ventilation method will be described with reference to Fig. 5.

In Fig. 5, it is assumed that the ventilation of the office 500 illustrated in Figs. 1 to 3 is performed without using the system control device 101.

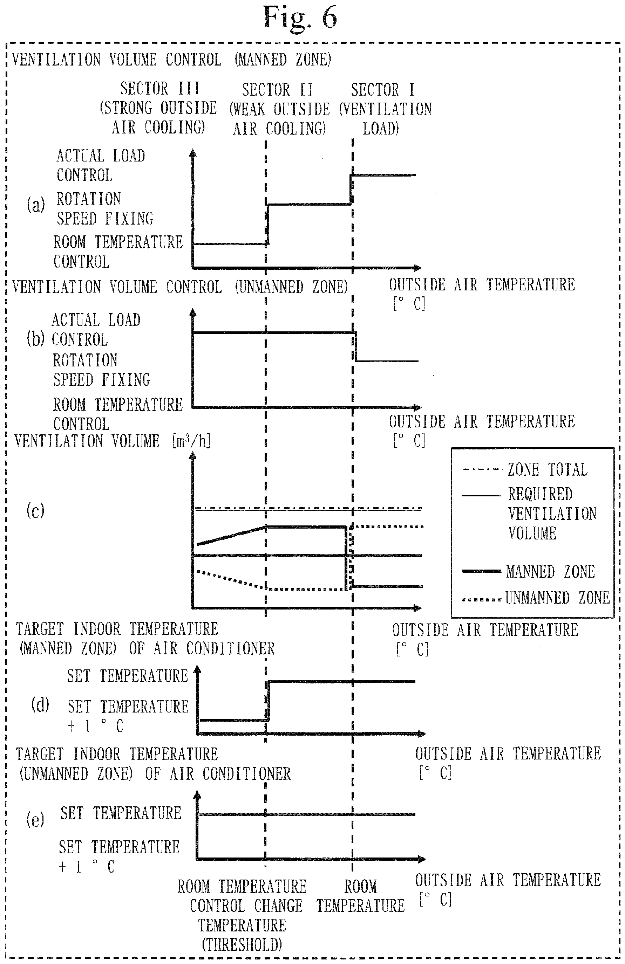

Besides, in Fig. 5 and Fig. 6 which is described later, it is assumed that a cooling operation is performed.

The rotation speed of the ventilation fan of the ventilation device 302 is changed by ventilation volume control. There are three types of ventilation volume control schemes: a ventilation fan rotation speed fixing scheme (hereinafter, also simply referred to as rotation speed fixing), an actual load control scheme (hereinafter, also simply referred to as actual load control), and an indoor temperature control scheme (hereinafter, also simply referred to as room temperature control).

The rotation speed fixing is an scheme of fixing the rotation speed (or fan notch) of the ventilation fan to a value set by the user using a remote controller (not illustrated). In the rotation speed fixing, in many cases, the rotation speed of the ventilation fan is usually set to a high rotation speed in order to enhance a ventilation effect (such as hot air not being stagnant indoors).

The actual load control is an scheme of controlling the rotation speed of the ventilation fan depending on a necessary ventilation volume required for the office 500. The required ventilation volume is the ventilation volume required for the office 500, which is obtained based on the number of people present in the office 500. The required ventilation volume is computed based on, for example, the number of people present indoors which is obtained from the detection result of the entry/exit management device 201. Further, the required ventilation volume may be computed based on a carbon dioxide concentration detected by a carbon dioxide sensor placed in the ventilation device 302. In this case, a carbon dioxide concentration as a target is stored in the ventilation device 302 in advance, and the required ventilation volume is decided so that the carbon dioxide concentration achieves a target value.

The room temperature control is an scheme of controlling the rotation speed of the ventilation fan so that the indoor temperature detected by the temperature sensor 202 of the ventilation device 302 achieves a set indoor temperature which is set in the air conditioner 301.

When the rotation speed fixing or the room temperature control is performed, the ventilation volume of each of the ventilation devices 302 is the ventilation volume decided by each control. When the actual load control is performed, a total value of the ventilation volume in the ventilation device 302 in which no actual load control (that is, the rotation speed fixing and the room temperature control) is performed, is subtracted from the required ventilation volume. Then, with the value obtained by the subtraction is, the ventilation volume of the ventilation device 302 in which the actual load control is performed, and the rotation speed of the ventilation fan are decided based on an efficient rotation speed or an efficient fan notch of the ventilation fan owned by the ventilation device 302 in which the actual load control is performed. For example, if there are four ventilation devices 302 in which the actual load control is performed and power efficiency of a strong notch is higher than that of a weak notch, (weak, weak, weak, weak) obtained by simply dividing the ventilation volume by the number of devices is changed to (strong, strong, stop, stop).

(a) of Fig. 5 illustrates a ventilation volume control scheme in an area 1 in the office 500 in the conventional ventilation method. (b) of Fig. 5 illustrates a ventilation volume control scheme in an area 2 in the office 500 in the conventional ventilation method. As illustrated in (a) of Fig. 5 and (b) of Fig. 5, in the conventional ventilation method, the actual load control is commonly performed in any area of the office 500. That is, in any of the area 1 and the area 2, the ventilation volume is adjusted according to the number of people present indoors. Note that, in Fig. 5, the office 500 is segmented into the area 1 and the area 2 from a point of view of simplicity of an explanation. Further, conventionally, the actual load control is always performed regardless of the outside air temperature.

(c) of Fig. 5 illustrates a relationship between: the ventilation volume of the area 1; the ventilation volume of the area 2; a total of the ventilation volume of the area 1 and the ventilation volume of the area 2; and the required ventilation volume. The ventilation volumes of the area 1 and the area 2 are the same, as illustrated in (c) of Fig. 5. That is, the ventilation volumes of the area 1 and the area 2 are both half of the required ventilation volume of the office 500.

Further, as illustrated in (d) of Fig. 5 and (e) of Fig. 5, in both the area 1 and the area 2, the target indoor temperature in the room temperature control is maintained at the set temperature of the air conditioner 301 which is specified by the user.

As described above, the conventional method illustrated in Fig. 5 has a following problem.

When the outside air temperature is higher than the indoor temperature, it is desirable to reduce the ventilation volume of the manned zone in which a person is present, from a point of view of chilling efficiency. Also, when the outside air temperature is lower than the indoor temperature, it is desirable to increase the ventilation volume of the manned zone from the point of view of chilling efficiency.

However, in conventional ventilation control illustrated in Fig. 5, there is no distinction between the manned zone and the unmanned zone. For this reason, the ventilation volume cannot be changed in the manned zone and the unmanned zone according to the relationship between the outside air temperature and the indoor temperature. Therefore, according to the conventional ventilation control illustrated in Fig. 5, the air conditioning load cannot be minimized, and thus, the energy saving property is impaired.

Fig. 6 illustrates a ventilation method by the system control device 101 according to the present embodiment.

In the present embodiment, the system control device 101 segments the office 500 into the manned zone and the unmanned zone as described above. Then, the system control device 101 uses different ventilation volume control schemes for the manned zone and the unmanned zone.

If the outside air temperature is higher than the indoor temperature, supplying the outside air into the unmanned zone can reduce more air conditioning load for the manned zone. On the other hand, when the outside air temperature is equal to or lower than the indoor temperature, supplying the outside air into the manned zone can reduce more air conditioning load for the manned zone. Therefore, in the present embodiment, an energy saving effect of the air conditioning is increased by setting a total ventilation air volume of the ventilation volume of the manned zone and the ventilation volume of the unmanned zone to the required ventilation volume of the office 500 and by adjusting the ventilation volumes of the manned zone and the unmanned zone according to the relationship between the outside air temperature and the indoor temperature.

In the present embodiment, three temperature sectors which are a sector I to a sector III are given based on a relationship between the outside air temperature and the indoor temperature.

In the sector I, the outside air temperature is higher than the indoor temperature. Therefore, the ventilation load is high in the sector I. That is, in the sector I, the more the ventilation volume is, the higher the indoor cooling load is.

In the sector II and the sector III, the outside air temperature is equal to or lower than the indoor temperature. In the sector II, the outside air temperature is higher than a predetermined room temperature control change temperature (threshold value). In the sector III, the outside air temperature is equal to or lower than the room temperature control change temperature. In the sector II, a cooling effect (outside air cooling effect) caused by taking in the outside air indoors is relatively small. On the other hand, in the sector III, the outside air cooling effect is relatively large.

(a) of Fig. 6 illustrates a ventilation volume control scheme for the manned zone according to the present embodiment. (b) of Fig. 6 illustrates a ventilation volume control scheme for the unmanned zone according to the present embodiment.

As illustrated in (a) of Fig. 6 and (b) of Fig. 6, in the present embodiment, the ventilation volume control scheme is changed depending on attributes (manned zone/unmanned zone) of the zones and the relationship (sector I/sector II/sector III) between the outside air temperature and the indoor temperature.

Specifically, in the manned zone, the actual load control is performed in the sector I. In the sector I, it is desirable to reduce as much air conditioning load as possible on the manned zone which is caused by the ventilation. Therefore, in the sector I, the system calculation unit 102 decides the ventilation volume control scheme for the unmanned zone to be the rotation speed fixing, and increases the ventilation volume of the unmanned zone. On the other hand, the system calculation unit 102 can reduce the ventilation volume of the manned zone by using the actual load control in the manned zone. As a result, it is possible to suppress the air conditioning load in the manned zone and obtain the energy saving effect.

On the other hand, in the sector II, the rotation speed fixing is performed in the manned zone. In the sector II, the outside air temperature is equal to or lower than a room temperature, and due to the outside air cooling effect, the more the ventilation volume is, the lower the indoor cooling load is. In the sector II, it is desirable to reduce as much air conditioning load as possible on the manned zone by increasing the ventilation volume. Therefore, the system calculation unit 102 increases the ventilation volume by using the rotation speed fixing as the ventilation volume control for the manned zone. As a result, it is possible to reduce the air conditioning load in the manned zone due to the outside air cooling effect. Further, the system calculation unit 102 uses the actual load control as the ventilation volume control scheme for the unmanned zone, so that the total ventilation volume of the manned zone and the unmanned zone reaches the required ventilation volume. By doing this, it is possible to obtain the energy saving effect even in the sector II.

Further, in the sector III, due to the outside air cooling effect, an indoor temperature adjustment is realizable. In the sector III, the system calculation unit 102 uses the room temperature control as the ventilation volume control scheme for the manned zone. On the other hand, the system calculation unit 102 uses the actual load control as the ventilation volume control scheme for the unmanned zone. The lower the outside air temperature is, the larger the outside air cooling effect is. Therefore, the system calculation unit 102 controls in such a way that the ventilation volume of the manned zone decreases and the ventilation volume of the unmanned zone increases.

(c) of Fig. 6 illustrates a relationship between: the ventilation volume of the manned zone and the ventilation volume of the unmanned zone; the total of the ventilation volume of the manned zone and the ventilation volume of the unmanned zone; and the required ventilation volume. The ventilation volumes of the manned zone and the unmanned zone change in each sector, as illustrated in (c) of Fig. 6.

That is, in the sector I, the system calculation unit 102 decides the ventilation volume of the manned zone and the ventilation volume of the unmanned zone so that the ventilation volume of the unmanned zone is more than the ventilation volume of the manned zone. In the sector II and the sector III, the system calculation unit 102 decides the ventilation volume of the manned zone and the ventilation volume of the unmanned zone so that the ventilation volume of the manned zone is more than the ventilation volume of the unmanned zone. In particular, in the sector III, the system calculation unit 102 decides the ventilation volume of the manned zone and the ventilation volume of the unmanned zone so that the ventilation volume of the manned zone decreases and the ventilation volume of the unmanned zone increases as the outside air temperature lowers. Note that, in any sector, the total of the ventilation volume of the manned zone and the ventilation volume of the unmanned zone is equal to the required ventilation volume.

Further, (d) of Fig. 6 illustrates the target indoor temperature in the room temperature control in the manned zone. (e) of Fig. 6 illustrates the target indoor temperature in the room temperature control in the unmanned zone. As illustrated in (d) of Fig. 6, the system control unit 103 sets to the target indoor temperature, a temperature which is higher by 1 °C than the set temperature of the air conditioner 301 in the sector III of the manned zone. In the sector III, the temperature in the manned zone is adjusted according to the ventilation volume. Therefore, the target indoor temperature of the air conditioner 301 in the manned zone is higher by 1 °C than the set temperature. By doing this, when the air temperature in the manned zone can be kept at the set temperature by the ventilation of the ventilation device 302, the system control unit 103 sets the operation mode of the air conditioner 301 to the thermo-off mode. On the other hand, if the indoor temperature cannot be adjusted by the ventilation volume and the indoor temperature becomes higher, the system control unit 103 sets the operation mode of the air conditioner 301 to the thermo-on mode. Thereby, it is possible to adjust the indoor temperature. Besides, in the unmanned zone, the system control unit 103 controls thermo-on/off so that the target indoor temperature of the air conditioner 301 is the set temperature in all sectors.

By doing this, it is possible to equalize the total of the ventilation volume of the manned zone and the ventilation volume of the unmanned zone with the required ventilation volume by adjusting the ventilation volume of the unmanned zone while adjusting the temperature by a chilling effect caused by the ventilation. Therefore, it is possible to lower the air conditioning load for the manned zone while lowering a ventilation power.

As described above, in the present embodiment, for each of the manned zone and the unmanned zone, the ventilation control scheme is changed individually. In addition, a ventilation volume control method is changed depending on the outside air temperature. In the present embodiment, it is assumed that the carbon dioxide concentration in the office 500 does not change depending on positions in the office 500 and the number of people present in the room.

Therefore, the present embodiment is premised on an assumption that the carbon dioxide concentration can be appropriately maintained as long as the required ventilation volume required for the office 500 is adjusted according to the total number of people present in the office 500. Also, on the other hand, the present embodiment is premised on an assumption that the air conditioning load is different depending on the area and the air conditioning load changes depending on the ventilation volume in each area. In other words, the present embodiment is premised on an assumption that the person present in the office 500 feels comfortable as long as the air conditioning load for the manned zone is processed.

Note that, in an example illustrated in Fig. 6, it is assumed that the total number of people present in the office 500 is fixed and the required ventilation volume of the office 500 is the same in the sector I, the sector II, and the sector III.

Besides, it is conceivable that the room temperature control change temperature which is on a boundary between the sector II and the sector III is, for example, 15 °C which is the outside air temperature in winter. When the outside air temperature is equal to or lower than 15 °C, a heating operation is usually performed in such an outside air temperature range. However, in recent years, thermal insulation of a building has been improved, and the number of cases has increased in which the cooling operation is performed even in winter. During a winter cooling operation, it is possible to cool the office 500 with a low electric power consumption by using the system control device 101 according to the present embodiment.

A value of the room temperature control change temperature is stored in the system storage unit 105.

Further, information which is illustrated in (a) and (b) of Fig. 6, defining the ventilation volume control scheme for the manned zone and the ventilation volume control scheme for the unmanned zone for each sector, is stored in the system storage unit 105 as control scheme definition information.

Further, information which is illustrated in (c) of Fig. 6, defining a ratio between the ventilation volume of the manned zone and the ventilation volume of the unmanned zone for each sector, is stored in the system storage unit 105 as ventilation volume ratio information.

### ^{∗∗∗} Description of Operation ^{∗∗∗}

Next, an operation principle of the system control device 101 according to the present embodiment will be described.

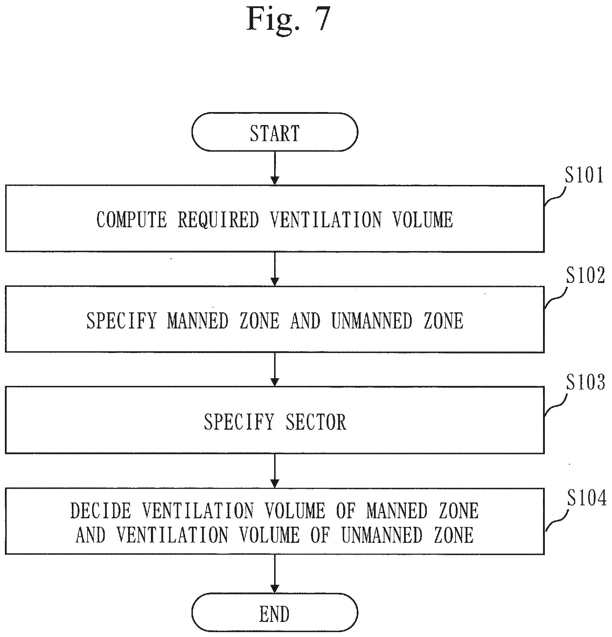

Fig. 7 is a flowchart diagram illustrating the operation principle of the system control device 101.

First, in step S101, the system calculation unit 102 computes the required ventilation volume. The system calculation unit 102 computes the required ventilation volume based on a floor square measure of the office 500 and the number of people present in the office 500. An existing method can be used as a method for computing the required ventilation volume.

As described above, the number of people present in the office 500 is obtained from, for example, the detection result of the entry/exit from the entry/exit management device 201.

Next, in step S102, the system calculation unit 102 specifies the manned zone and the unmanned zone in the office 500.

The system calculation unit 102 determines whether each of the air conditioning areas 305 is manned or unmanned, and segments the office 500 into the manned zone and the unmanned zone. For example, the system calculation unit 102 analyzes a sensing result of the motion sensor 203 provided for each of the air conditioning areas 305, and determines whether the air conditioning area 305 is manned or unmanned. The system calculation unit 102 determines as the manned zone regardless of the number of people if there is a person in the air conditioning area 305.

Next, in step S103, the system calculation unit 102 determines which of the sector I, the sector II, or the sector III illustrated in Fig. 6 a current state of the office 500 corresponds to.

That is, the system calculation unit 102 determines which sector the current state of the office 500 corresponds to, based on a relationship between a current indoor temperature and the outside air temperature.

Next, in step S104, the system calculation unit 102 decides the ventilation volume of the manned zone and the ventilation volume of the unmanned zone.

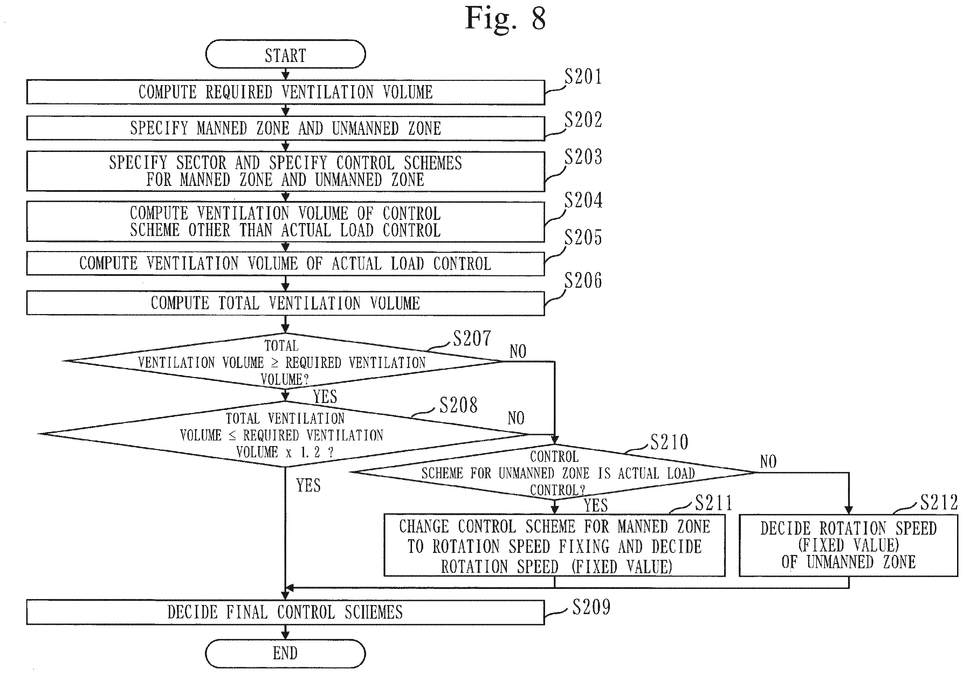

The system calculation unit 102 decides the ventilation volume of the manned zone and the ventilation volume of the unmanned zone so that the total of the ventilation volume of the manned zone and the ventilation volume of the unmanned zone is equal to or more than the required ventilation volume computed in step S101. For example, as illustrated in Fig. 8 which is described later, the system calculation unit 102 decides the ventilation volume of the manned zone and the ventilation volume of the unmanned zone based on the ventilation volume control scheme for the manned zone and the ventilation volume control scheme for the unmanned zone. Further, the system calculation unit 102 may apply to the required ventilation volume computed in step S101, a ratio of the ventilation volume of the manned zone and a ratio of the ventilation volume of the unmanned zone illustrated in the ventilation volume ratio information. Then, the system calculation unit 102 may decide the ventilation volume of the manned zone and the ventilation volume of the unmanned zone. Further, the system calculation unit 102 may adjust the rotation speed of the ventilation fan in step S211 or S212 of Fig. 8 which is described later so as to realize the decided ventilation volumes.

Fig. 8 illustrates a specific example of a method for deciding the ventilation volume of the manned zone and the ventilation volume of the unmanned zone.

Steps S201 and S202 are the same as steps S101 and S102 illustrated in Fig. 7. Therefore, descriptions will be omitted.

Next, in step S203, the system calculation unit 102 determines which of the sector I, the sector II, or the sector III illustrated in Fig. 6 the current state of the office 500 corresponds to, and further specifies the ventilation volume control scheme for the manned zone and the ventilation volume control scheme for the unmanned zone. Specifically, the system calculation unit 102 reads the control scheme definition information from the system storage unit 105 and specifies the ventilation volume control scheme for the manned zone and the ventilation volume control scheme for the unmanned zone according to a definition of the control scheme definition information.

Next, in step S204, the system calculation unit 102 computes the ventilation volume in a case where the ventilation is performed using an scheme other than the actual load control.

For example, when the current state of the office 500 corresponds to the sector I, the system calculation unit 102 computes the ventilation volume of the ventilation device 302 in the unmanned zone in a case of performing the ventilation using the rotation speed fixing since the ventilation volume control scheme for the unmanned zone is the rotation speed fixing according to the control scheme definition information. The ventilation volume of the unmanned zone computed in this way corresponds to a predicted unmanned zone ventilation volume.

Further, when the current state of the office 500 corresponds to the sector II, the system calculation unit 102 computes the ventilation volume of the ventilation device 302 in the manned zone in a case of performing the ventilation using the rotation speed fixing since the ventilation volume control scheme for the manned zone is the rotation speed fixing according to the control scheme definition information. Further, when the current state of the office 500 corresponds to the sector III, the system calculation unit 102 computes the ventilation volume of the ventilation device 302 in the manned zone in a case of performing the ventilation using the room temperature control since the ventilation volume control scheme for the manned zone is the room temperature control according to the control scheme definition information. The ventilation volume of the manned zone computed in this way corresponds to a predicted manned zone ventilation volume.

Next, in step S205, the ventilation volume in a case where the ventilation is performed using the actual load control is computed.

For example, when the current state of the office 500 corresponds to the sector I, the system calculation unit 102 computes the ventilation volume of the ventilation device 302 in the manned zone in a case of performing the ventilation using the actual load control since the ventilation volume control scheme for the manned zone is the actual load control according to the control scheme definition information. The ventilation volume of the manned zone computed in this way also corresponds to the predicted manned zone ventilation volume.

Further, when the current state of the office 500 corresponds to the sector II or the sector III, the system calculation unit 102 computes the ventilation volume of the ventilation device 302 in the unmanned zone in a case of performing the ventilation using the actual load control since the ventilation volume control scheme for the unmanned zone is the actual load control according to the control scheme definition information. The ventilation volume of the unmanned zone computed in this way also corresponds to the predicted unmanned zone ventilation volume.

Next, in step S206, the system calculation unit 102 totals up the ventilation volume obtained in step S204 and the ventilation volume obtained in step S205 to obtain the total ventilation volume.

Next, in step S207, the system calculation unit 102 compares the total ventilation volume with the required ventilation volume.

If the total ventilation volume is equal to or more than the required ventilation volume, the process proceeds to step S208. On the other hand, if the total ventilation volume is less than the required ventilation volume (that is, the ventilation volume is insufficient), the process proceeds to step S210.

In step S208, the system calculation unit 102 compares the total ventilation volume with 1.2 times as much as the required ventilation volume.

If the total ventilation volume is equal to or less than 1.2 times as much as the required ventilation volume, the process proceeds to step S209. On the other hand, if the total ventilation volume exceeds 1.2 times as much as the required ventilation volume (that is, the ventilation volume is too much), the process proceeds to step S210.

In step S210, the system calculation unit 102 determines whether or not the ventilation volume control scheme for the unmanned zone is the actual load control.

If the ventilation volume control scheme for the unmanned zone is the actual load control, the process proceeds to step S211. On the other hand, if the ventilation volume control scheme for the unmanned zone is not the actual load control, the process proceeds to step S212.

When the current state of the office 500 corresponds to the sector I, the ventilation volume control scheme for the unmanned zone is not the actual load control but the rotation speed fixing. Therefore, the process proceeds to step S212. On the other hand, when the current state of the office 500 corresponds to the sector II or the sector III, the ventilation volume control scheme for the unmanned zone is the actual load control. Therefore, the process proceeds to step S211.

In step S211, the system calculation unit 102 changes the ventilation volume control scheme for the manned zone to the rotation speed fixing, if the current state of the office 500 corresponds to the sector III. If the current state of the office 500 is the sector II, the system calculation unit 102 does not change the ventilation volume control scheme for the manned zone since the ventilation volume control scheme for the manned zone is the rotation speed fixing.

Then, the system calculation unit 102 decides the rotation speed (fixed value) of the ventilation fan in the manned zone which is a computation condition so that the total ventilation volume of the ventilation volume of the manned zone and the ventilation volume of the unmanned zone is within a range from the required ventilation volume to 1.2 times as much as the required ventilation volume. The system calculation unit 102 decides an appropriate rotation speed of the ventilation fan while changing the rotation speed of the ventilation fan, for example, in a trial and error scheme.

In step S212, the system calculation unit 102 decides the rotation speed (fixed value) of the ventilation fan in the unmanned zone which is a computation condition so that the total ventilation volume of the ventilation volume of the manned zone and the ventilation volume of the unmanned zone is within the range from the required ventilation volume to 1.2 times as much as the required ventilation volume. The system calculation unit 102 decides the appropriate rotation speed of the ventilation fan while changing the rotation speed of the ventilation fan, for example, in the trial and error scheme.

In step S209, the system calculation unit 102 finally decides the ventilation volume control scheme.

When the process proceeds from step S208 to step S209, the system calculation unit 102 decides as final ventilation volume control schemes, the ventilation volume control scheme for the manned zone and the ventilation volume control scheme for the unmanned zone which are defined in the control scheme definition information. Further, the ventilation volume of the manned zone is the ventilation volume computed in step S204 or step S205. Similarly, the ventilation volume of the unmanned zone is the ventilation volume computed in step S205 or step S204. For example, if the current state of the office 500 corresponds to the sector I, the ventilation volume control scheme for the manned zone is the actual load control, and the ventilation volume control scheme for the unmanned zone is the rotation speed fixing. Further, the ventilation volume of the manned zone is the ventilation volume obtained in step S205, and the ventilation volume of the unmanned zone is the ventilation volume obtained in step S204.

Further, when the process proceeds from step S211 to step S209, the ventilation volume control scheme for the manned zone is the rotation speed fixing, and the ventilation volume control scheme for the unmanned zone is the actual load control. Further, the ventilation volume of the manned zone is the ventilation volume obtained in step S211, and the ventilation volume of the unmanned zone is the ventilation volume obtained in step S205.

Further, when the process proceeds from step S212 to step S209, the ventilation volume control scheme for the manned zone is the actual load control, and the ventilation volume control scheme for the unmanned zone is the rotation speed fixing. Further, the ventilation volume of the manned zone is the ventilation volume obtained in step S205, and the ventilation volume of the unmanned zone is the ventilation volume obtained in step S212.

### ^{∗∗∗}Description of Effect of Embodiment ^{∗∗∗}

As described above, according to the present embodiment, since the ventilation volume can be efficiently adjusted, it is possible to obtain the energy saving effect in the air conditioning.

Further, in the present embodiment, in any sector of the sector I, the sector II, and the sector III, the actual load control is performed in either the manned zone or the unmanned zone, and control other than the actual load control is performed in the other zone (the ventilation volume is corrected regardless of the required ventilation volume). Thereby, in any sector, the total ventilation volume is within the range from the required ventilation volume to 1.2 times as much as the required ventilation volume. Besides, in the above, even though the range from the required ventilation volume to 1.2 times as much as the required ventilation volume is set as a predetermined range, a range other than this range may be used as the predetermined range.

Further, each ventilation device 302 has individually a ventilation fan and changes the rotation speed or the fan notch of each fan to control the ventilation volume, thereby, it is possible to select a well power-efficient operation. Therefore, it is possible to reduce a power consumption even if the required ventilation volume is the same.

### ^{∗∗∗} Description of Hardware Configuration ^{∗∗∗}

Finally, a supplementary explanation of a hardware configuration of the system control device 101 will be given.

The processor 901 illustrated in Fig. 9 is an IC (Integrated Circuit) that performs processing.

The processor 901 is a CPU (Central Processing Unit), a DSP (Digital Signal Processor), or the like.

The main storage device 902 illustrated in Fig. 9 is a RAM (Random Access Memory). Further, the auxiliary storage device 903 illustrated in Fig. 9 is a ROM (Read Only Memory), a flash memory, an HDD (Hard Disk Drive), or the like.

The communication device 904 illustrated in Fig. 9 is an electronic circuit that executes a communication process of data.

The communication device 904 is, for example, a communication chip or an NIC (Network Interface Card).

In addition, an OS (Operating System) is also stored in the auxiliary storage device 903.

Then, at least a part of the OS is executed by the processor 901.

The processor 901 executes programs that realize functions of the system calculation unit 102, the system control unit 103, and the system communication unit 104 while executing at least the part of the OS.

By the processor 901 executing the OS, task management, memory management, file management, communication control, and the like are performed.

Further, at least one of information, data, a signal value, and a variable value indicating a processing result of the system calculation unit 102, the system control unit 103, and the system communication unit 104 is stored in at least one of the main storage device 902, the auxiliary storage device 903, and a register and a cache memory of the processor 901.

Further, the programs that realize the functions of the system calculation unit 102, the system control unit 103, and the system communication unit 104 may be stored in a portable recording medium such as a magnetic disk, a flexible disk, an optical disk, a compact disk, a Blu-ray (registered trademark) disk, or a DVD.

Further, "unit" of the system calculation unit 102, the system control unit 103, and the system communication unit 104 may be read as "circuit" or "step" or "procedure" or "process".

Further, the system control device 101 may be realized by a processing circuit. The processing circuit is, for example, a logic IC (Integrated Circuit), a GA (Gate Array), an ASIC (Application Specific Integrated Circuit), or an FPGA (Field-Programmable Gate Array).

Besides, in the present specification, a superordinate concept of the processor and the processing circuit is referred to as "processing circuitry".

That is, each of the processor and the processing circuit is a specific example of the "processing circuitry".

### Reference Signs List

100: air conditioning system, 101: system control device, 102: system calculation unit, 103: system control unit, 104: system communication unit, 105: system storage unit, 121: air conditioner control device, 141: ventilation control device, 201: entry/exit management device, 202: temperature sensor, 203: motion sensor, 301: air conditioner, 302: ventilation device, 303: air supply port, 304: duct, 305: air conditioning area, 306: duct, 309: lighting equipment, 310: duct, 311: staff seat, 312: group leader seat, 313: meeting space, 314: duct, 315: door, 500: office.

## Claims

1. A ventilation adjustment device comprising:
a required ventilation volume computing unit to compute a required ventilation volume which is a ventilation volume required for an interior space where a plurality of ventilation devices are placed and ventilation is necessary; and
an individual ventilation volume deciding unit to decide, for each ventilation device of the plurality of ventilation devices, an individual ventilation volume which is a ventilation volume to be generated in each ventilation device, based on the required ventilation volume.

2. The ventilation adjustment device according to claim 1,
wherein the individual ventilation volume deciding unit changes and decides the individual ventilation volume for each ventilation device.

3. The ventilation adjustment device according to claim 1, the ventilation adjustment device further comprising:
a zone segmenting unit to segment the interior space into a manned zone in which a person is present and an unmanned zone in which no person is present; and
a zone ventilation volume deciding unit to decide a ventilation volume to be generated in the manned zone and a ventilation volume to be generated in the unmanned zone based on the required ventilation volume, and
wherein the individual ventilation volume deciding unit
decides an individual ventilation volume of a ventilation device placed in the manned zone, based on the ventilation volume to be generated in the manned zone, and
decides an individual ventilation volume of a ventilation device placed in the unmanned zone, based on the ventilation volume to be generated in the unmanned zone.

4. The ventilation adjustment device according to claim 3,
wherein the zone ventilation volume deciding unit changes the ventilation volume to be generated in the manned zone and the ventilation volume to be generated in the unmanned zone according to an outside air temperature.

5. The ventilation adjustment device according to claim 3,
wherein the zone ventilation volume deciding unit changes the ventilation volume to be generated in the manned zone and the ventilation volume to be generated in the unmanned zone according to a relationship between an outside air temperature and an interior temperature of the interior space.

6. The ventilation adjustment device according to claim 5,
wherein the zone ventilation volume deciding unit
refers to control scheme definition information which defines according to the relationship between the outside air temperature and the interior temperature, ventilation volume control scheme for the ventilation device placed in the manned zone and a ventilation volume control scheme for the ventilation device placed in the unmanned zone,
computes as a predicted manned zone ventilation volume, the ventilation volume to be generated in the manned zone in a case where the ventilation device placed in the manned zone is controlled using the ventilation volume control scheme defined by the control scheme definition information, according to the relationship between the outside air temperature and the interior temperature,
computes as a predicted unmanned zone ventilation volume, the ventilation volume to be generated in the unmanned zone in a case where the ventilation device placed in the unmanned zone is controlled using the ventilation volume control scheme defined by the control scheme definition information, according to the relationship between the outside air temperature and the interior temperature, and
decides the ventilation volume to be generated in the manned zone and the ventilation volume to be generated in the unmanned zone based on the predicted manned zone ventilation volume and the predicted unmanned zone ventilation volume.

7. The ventilation adjustment device according to claim 6,
wherein the zone ventilation volume deciding unit
compares a total value of the predicted manned zone ventilation volume and the predicted unmanned zone ventilation volume with the required ventilation volume, and
in either of a case where the total value of the predicted manned zone ventilation volume and the predicted unmanned zone ventilation volume is less than the required ventilation volume, or a case where the total value of the predicted manned zone ventilation volume and the predicted unmanned zone ventilation volume exceeds the required ventilation volume to an extent beyond a predetermined range, newly computes either of the predicted manned zone ventilation volume or the predicted unmanned zone ventilation volume, while changing a computation condition.

8. The ventilation adjustment device according to claim 5,
wherein when the outside air temperature exceeds the interior temperature, the zone ventilation volume deciding unit decides the ventilation volume to be generated in the manned zone and the ventilation volume to be generated in the unmanned zone so that the ventilation volume to be generated in the unmanned zone is more than the ventilation volume to be generated in the manned zone.

9. The ventilation adjustment device according to claim 6,
wherein when the outside air temperature exceeds the interior temperature, the zone ventilation volume deciding unit computes as a predicted manned zone ventilation volume, the ventilation volume to be generated in the manned zone in a case where the ventilation device placed in the manned zone is controlled using an actual load control scheme, computes as a predicted unmanned zone ventilation volume, the ventilation volume to be generated in the unmanned zone in a case where the ventilation device placed in the unmanned zone is controlled using a ventilation fan rotation speed fixing scheme, and decides the ventilation volume to be generated in the manned zone and the ventilation volume to be generated in the unmanned zone based on the predicted manned zone ventilation volume and the predicted unmanned zone ventilation volume.

10. The ventilation adjustment device according to claim 5,
wherein when the outside air temperature is equal to or lower than the interior temperature of the interior space, the zone ventilation volume deciding unit decides the ventilation volume to be generated in the manned zone and the ventilation volume to be generated in the unmanned zone so that the ventilation volume to be generated in the manned zone is more than the ventilation volume to be generated in the unmanned zone.

11. The ventilation adjustment device according to claim 10,
wherein when the outside air temperature is equal to or lower than the interior temperature, the zone ventilation volume deciding unit computes as a predicted manned zone ventilation volume, the ventilation volume to be generated in the manned zone in a case where the ventilation device placed in the manned zone is controlled using either of a ventilation fan rotation speed fixing scheme or an indoor temperature control scheme, computes as a predicted unmanned zone ventilation volume, the ventilation volume to be generated in the unmanned zone in a case where the ventilation device placed in the unmanned zone is controlled using an actual load control scheme, and decides the ventilation volume to be generated in the manned zone and the ventilation volume to be generated in the unmanned zone based on the predicted manned zone ventilation volume and the predicted unmanned zone ventilation volume.

12. The ventilation adjustment device according to claim 10,
wherein when the outside air temperature is lower than the interior temperature and is equal to or lower than a predetermined threshold, the zone ventilation volume deciding unit decides the ventilation volume to be generated in the manned zone and the ventilation volume to be generated in the unmanned zone so that the ventilation volume of the manned zone decreases and the ventilation volume of the unmanned zone increases as the outside air temperature lowers.

13. The ventilation adjustment device according to claim 12,
wherein when the outside air temperature is equal to or lower than the threshold, the zone ventilation volume deciding unit computes as a predicted manned zone ventilation volume, the ventilation volume to be generated in the manned zone in a case where the ventilation device placed in the manned zone is controlled using an indoor temperature control scheme, computes as a predicted unmanned zone ventilation volume, the ventilation volume to be generated in the unmanned zone in a case where the ventilation device placed in the unmanned zone is controlled using an actual load control scheme, and decides the ventilation volume to be generated in the manned zone and the ventilation volume to be generated in the unmanned zone based on the predicted manned zone ventilation volume and the predicted unmanned zone ventilation volume.

14. The ventilation adjustment device according to claim 13,
wherein an air conditioner is placed in the interior space, and
the ventilation adjustment device further comprising
a target temperature management unit to set, when the ventilation device placed in the manned zone is controlled using the indoor temperature control scheme, a target temperature in the indoor temperature control scheme to a temperature higher than a current set temperature of the air conditioner.

15. The ventilation adjustment device according to claim 14, the ventilation adjustment device further comprising
a mode management unit to change an operation mode of the air conditioner to either of a thermo-off mode or a blower mode, when the target temperature in the indoor temperature control scheme is set to the temperature higher than the current set temperature of the air conditioner by the target temperature management unit.

16. The ventilation adjustment device according to claim 3,
wherein the required ventilation volume computing unit computes the required ventilation volume required for the interior space, based at least on one of the number of people present in the interior space and a carbon dioxide concentration in the interior space.

17. A ventilation adjustment method comprising:
computing, by a computer, a required ventilation volume which is a ventilation volume required for an interior space where a plurality of ventilation devices are placed and ventilation is necessary; and
deciding, by the computer, for each ventilation device of the plurality of ventilation devices, an individual ventilation volume which is a ventilation volume to be generated in each ventilation device, based on the required ventilation volume.
